# FASCICULE DE BREVET EUROPEEN

(11) **EP 3 181 474 B1**
(45) Date de publication et mention de la délivrance du brevet: **31.07.2019**
(21) Numéro de dépôt: 16204105.7
(22) Date de dépôt: 14.12.2016
(51) Int. Cl.: B65D 47/20, B29C 45/00

(54) **BOUCHON EN PLASTIQUE STOP-GOUTTE, NOTAMMENT POUR LIQUIDE PLUS OU MOINS VISQUEUX**
TROPF-STOPP-PLASTIKSTOPFEN, INSBESONDERE FÜR MEHR ODER WENIGER VISKOSE FLÜSSIGKEIT
DRIP-PROOF PLASTIC CAP, IN PARTICULAR FOR MORE OR LESS VISCOUS LIQUID

(30) Priorité: 18.12.2015 FR 1562830
(43) Date de publication de la demande: 21.06.2017
(73) Titulaire: Nouvelle Manufacture Bourguignonne de Plastique, 21850 Saint-Apollinaire (FR)
(72) Inventeur: GALLY, Alain, 21800 CRIMOLOIS (FR); TACCOEN, Bruno, 21000 DIJON (FR)
(74) Mandataire: de la Bigne, Guillaume Michel Marie

(56) Documents cités:
- WO-A1-2007/097744
- WO-A1-2009/056792
- WO-A1-2015/092452
- HU-B- 227 230
- US-A1- 2008 073 348

## Description

La présente invention concerne le domaine de l'emballage. Elle concerne plus particulièrement un bouchon en plastique selon le préambule de la revendication 1, destiné à équiper un emballage contenant notamment un liquide relativement visqueux, par exemple une huile alimentaire, un sirop ou une sauce, ou bien relativement peu visqueux. Un tel bouchon en plastique est divulgué par le document WO 2007/097744.

On propose déjà dans le commerce un emballage comprenant un bouchon en plastique stop-goutte rapporté sur un corps de cet emballage contenant par exemple de l'huile alimentaire. Cet emballage comprend un bouchon en plastique muni d'une embase rapportée sur un corps en plastique déformable de l'emballage.

L'embase comprend une buse à travers laquelle l'huile alimentaire contenue dans l'emballage est destinée à être éjectée à l'extérieur de l'emballage lorsqu'un utilisateur comprime le corps de l'emballage. Lorsque l'utilisateur réalise cette compression du corps de l'emballage pour prélever l'huile contenue dans l'emballage, il oriente généralement l'emballage tête en bas de façon à placer le corps de l'emballage plus haut que la buse et bénéficier de l'effet de la gravité pour diriger le jet d'huile à l'extérieur de l'emballage.

L'embase comporte également une valve stop-goutte raccordant la buse avec l'intérieur du corps d'emballage contenant l'huile alimentaire. Cette valve stop-goutte est rapportée à l'intérieur de la buse. Elle est réalisée dans un matériau élastique, par exemple en silicone, différent du matériau de l'embase.

La valve stop-goutte comporte des feuillets déformables élastiquement entre des configurations fermée et ouverte.

En configuration fermée, les feuillets sont sensiblement jointifs entre eux et peuvent s'opposer à l'écoulement de l'huile à travers la buse, même lorsque l'emballage est orienté tête en bas. En effet, même dans ce cas, les feuillets restent suffisamment jointifs pour s'opposer à l'effet de la gravité ayant tendance à entrainer l'huile, qui est relativement visqueuse, à travers la buse.

Par contre, lorsque l'utilisateur comprime le corps de l'emballage, il communique à l'huile une pression suffisante pour écarter les feuillets entre eux et permettre l'éjection vers l'extérieur de l'huile contenue dans l'emballage. La valve est dans ce cas en configuration ouverte. Dès que l'utilisateur relâche la pression exercée sur le corps de l'emballage, la valve revient en configuration fermée et s'oppose à l'écoulement de l'huile à travers la buse sans pratiquement laisser passer aucune goutte, ce qui explique que l'on appelle cette valve « valve stop-goutte ».

Le document WO 2007/097744 divulgue un tel bouchon en plastique stop-goutte en une seule pièce dont les feuillets sont raccordés par des fines membranes afin de limiter l'espacement maximal des feuillets. Ces fines membranes sont toutefois très difficiles à produire et, empêche, par leur introduction entre les feuillets, la bonne fermeture des feuillets. Enfin, en position fermée, la valve stop-goutte comporte une étanchéité imparfaite, notamment, en laissant toujours passer des gouttes par le trou central.

L'invention a notamment pour but de proposer un bouchon en plastique stop-goutte efficace mais plus simple à fabriquer et à utiliser que celui déjà connu.

A cet effet, l'invention a pour objet un bouchon en plastique selon la revendication 1.

D'autres modes de réalisation avantageuses sont divulguées dans les revendications dépendantes.

La valve stop-goutte étant venue de matière avec l'embase, le bouchon peut être fabriqué avec un seul matériau (mono matière) moulé entièrement dans un seul moule. La fabrication du bouchon est donc simplifiée par rapport à celle d'un bouchon selon l'état de la technique.

De plus, il a pu être observé de façon relativement surprenante que l"amincissement de matière forme une articulation élastique de chaque feuillet lui permettant de pivoter élastiquement entre des positions de fermeture et d'ouverture pour définir des configurations ouverte et fermée de la valve ayant une efficacité comparable, voire supérieure, aux configurations ouverte et fermée d'une valve stop-goutte classique en silicone.

Enfin, chaque aube oblige avantageusement le déplacement de son feuillet associé avant de pouvoir laisser passer tout produit présent dans l'emballage. Chaque aube permet ainsi d'orienter favorablement le flux de produit sortant de l'emballage.

L'invention a également pour objet un emballage comprenant un bouchon en plastique rapporté sur un corps de cet emballage, selon la revendication 8.

L'invention a également pour objet un procédé de fabrication par moulage dans un moule d'un bouchon en plastique selon la revendication 9.

L'invention sera mieux comprise à la lecture de la description qui va suivre donnée uniquement à titre d'exemple et faite en se référant aux dessins dans lesquels :
- la figure 1 est une vue en perspective d'un emballage selon l'invention comprenant un bouchon en plastique également selon l'invention rapporté sur un corps de cet emballage, le couvercle du bouchon étant dans sa position de fermeture ;
- les figure 2 et 3 sont des vues en coupe axiale du bouchon représenté sur la figure 1, le couvercle du bouchon étant respectivement dans ses positions de fermeture et d'ouverture ;
- la figure 4 est une vue en perspective montrant la valve stop-goutte, sensiblement selon la flèche IV de la figure 3 ;
- la figure 5 est une vue en perspective, sensiblement de trois-quarts dessus du bouchon représenté à la figure 3 ;
- les figures 6 à 10 sont des vues en coupe axiale d'un moule pour la mise en oeuvre d'un procédé selon l'invention de fabrication du bouchon représenté à la figure 1, dans différentes configurations de fonctionnement de ce moule.

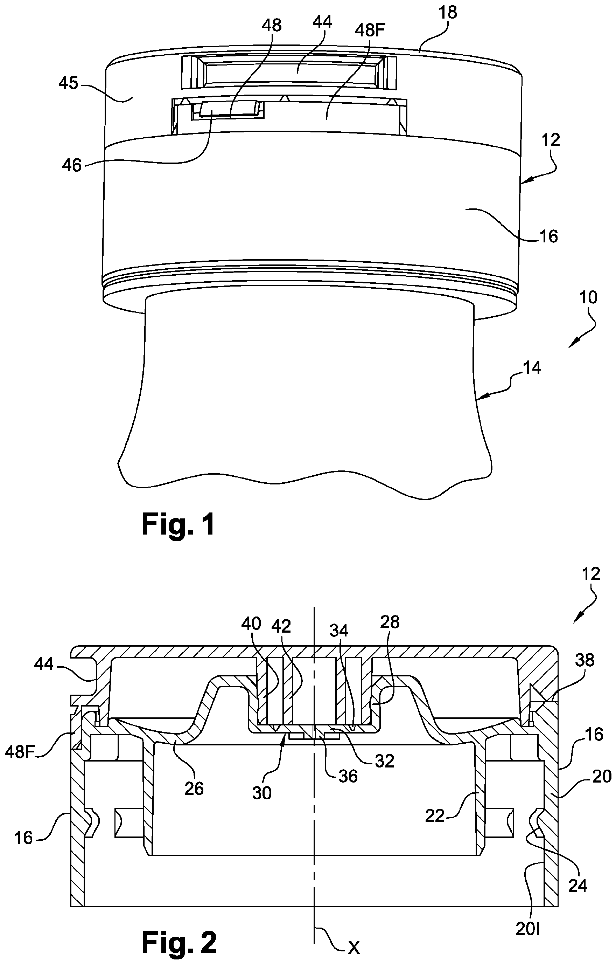

On a représenté sur la figure 1 un emballage 10 selon l'invention comprenant un bouchon 12 en plastique rapporté sur un corps classique 14 de l'emballage.

Le bouchon 12 est formé d'un seul bloc par moulage d'un matériau unique, à savoir un matériau plastique compatible, dans l'exemple illustré, avec un usage alimentaire.

Le bouchon 12, de forme générale de révolution, comporte une embase 16, destinée à être rapportée sur le corps 14 d'emballage, par exemple par encliquetage ou vissage.

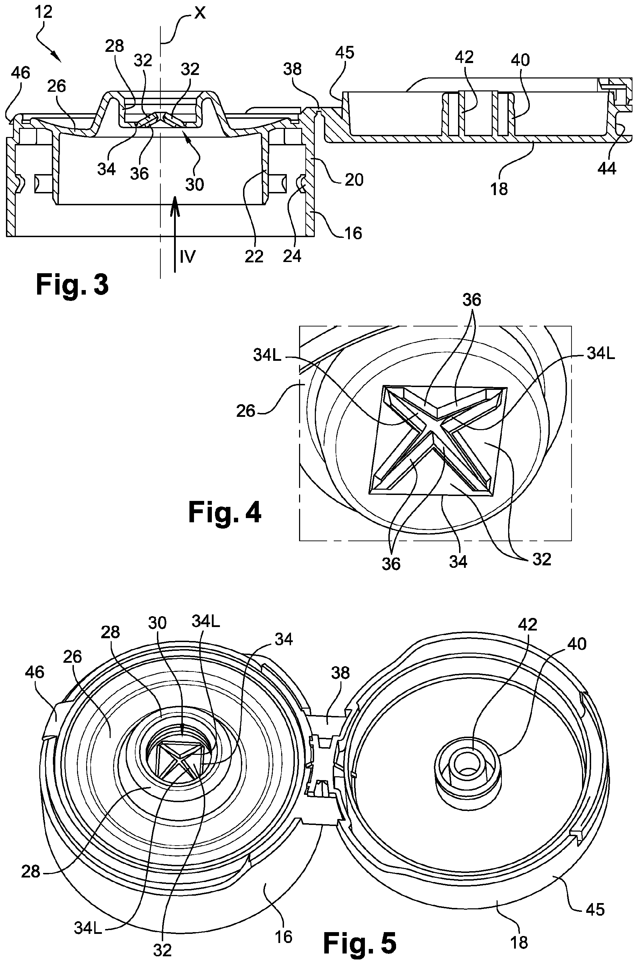

Le bouchon 12 comporte également un couvercle 18 déplaçable par rapport à l'embase 16, par exemple grâce à des moyens d'articulation ou de vissage sur l'embase 16, entre une position de fermeture, représentée sur les figures 1 et 2, et une position d'ouverture, représentée sur les figures 3 et 5.

Le corps 14 d'emballage est destiné à contenir un produit généralement liquide, de préférence relativement visqueux, par exemple un produit alimentaire tel que de l'huile alimentaire.

Le corps 14 d'emballage est fabriqué dans un matériau classique, à savoir un matériau en plastique ou en composite, mono ou multicouche, le cas échéant en feuilles souples, compatible, dans l'exemple illustré, avec un usage alimentaire. Le corps 14 d'emballage est susceptible d'être déformé par compression de façon à permettre à un utilisateur d'éjecter le produit contenu dans le corps 14 d'emballage lorsqu'il exerce une compression sur ce corps 14.

En se référant notamment aux figures 2 et 3, on voit que l'embase 16 a une forme générale de révolution et comprend deux jupes, respectivement externe 20 et interne 22 entre lesquelles un goulot classique du corps 14 d'emballage est destiné à être fixé par exemple par encliquetage ou par vissage. Ainsi, on notera que la jupe externe 20 comporte sur sa surface radialement interne 20I un cordon annulaire d'encliquetage interrompu 24 destiné à coopérer avec des moyens complémentaires portés par le goulot du corps 14 emballage.

Les jupes externe 20 et interne 22 sont reliées chacune à une paroi sensiblement transversale à un axe de révolution X du bouchon 12 et de l'embase 16, dite paroi de dessus 26.

La paroi de dessus 26 est munie d'un bourrelet annulaire faisant saillie vers l'extérieur de l'emballage et formant une buse 28 à travers laquelle le produit contenu dans le corps 14 d'emballage est destiné à être éjecté à l'extérieur de l'emballage.

En se référant aux figures 2 à 5, on voit qu'une valve stop-goutte 30 est venue de matière avec la paroi de dessus 26. La valve stop-goutte 30 est destinée à raccorder la buse 28 avec l'intérieur du corps 14 d'emballage contenant le produit.

La valve stop-goutte 30 comporte des feuillets 32 déformables élastiquement entre :
- une configuration de la valve 30 dite fermée, destinée à retenir le produit contenu dans le corps 14 d'emballage, dans laquelle les feuillets 32 sont sensiblement jointifs entre eux, comme cela est représenté sur la figure 2, et
- une configuration de la valve 30 dite ouverte, dans laquelle les feuillets 32 sont écartés entre eux, destinée à permettre l'éjection vers l'extérieur du produit contenu dans l'emballage, comme cela est représenté sur les figures 3 à 5.

De préférence, la valve stop-goutte 30 comprend quatre feuillets 32. Toutefois, en variante, la valve stop-goutte 30 peut comporter seulement trois feuillets 32 ou bien plus de quatre feuillets 32, par exemple cinq ou six feuillets 32.

Les feuillets 32 sont reliés à la paroi de dessus 26, plus particulièrement à la partie de cette paroi 26 formant la buse 28, chacun par un amincissement de matière formant une articulation élastique 34 du feuillet 32.

Chaque feuillet 32 est déplaçable élastiquement autour de son articulation 34 entre une position de fermeture, telle que représentée sur la figures 2, et une position d'ouverture, telle que représentée sur les figures 3 et 5, ces positions de fermeture et d'ouverture correspondant respectivement aux configurations ouverte et fermée de la valve stop-goutte 30.

On notera que les feuillets 32 sont naturellement rappelés élastiquement vers leur position de fermeture qui correspond à une position de repos.

En se référant à la figure 5, on voit que chaque feuillet 32 a une forme générale de triangle. L'articulation élastique 34 de chaque feuillet 32 forme un premier côté du triangle. Les deuxième et troisième côtés du triangle sont formés par des bords libres 34L du feuillet 32 qui sont sensiblement jointifs avec des bords libres de feuillets adjacents 32 lorsque la valve stop-goutte 30 est en configuration fermée.

En variante, la forme de chaque feuillet 32 peut être telle que lorsque les feuillets sont jointifs, ils laissent subsister un petit passage, de préférence circulaire, au centre de la valve stop-goutte 30.

En se référant plus particulièrement aux figures 2 et 4, on voit que les bords libres 34L de chaque feuillet 32 sont munis chacun d'une saillie formant aube 36 destinée à favoriser, par contact avec du produit éjecté vers l'extérieur du corps 14 d'emballage, l'entraînement du feuillet 32 de sa position de fermeture vers sa position d'ouverture.

Comme mieux visible à la figure 4 montrant la valve stop-goutte 30 vue de dessous, chaque aube 36 forme un prisme à section triangulaire, chaque feuillet 32 comportant deux aubes 36 se joignant selon un angle sensiblement droit. Bien entendu, l'angle entre les deux aubes 36 est fonction de la géométrie de son feuillet 32 associé. On comprend notamment que si la valve stop-goutte 30 comporte plus de quatre feuillets 32, l'angle sera plus petit que 90 degrés et, que si la valve stop-goutte 30 comporte moins de quatre feuillets 32, l'angle sera plus grand que 90 degrés.

En variante, on pourrait prévoir que seul un des bords libres 34L de chaque feuillet forme une aube 36.

En se référant aux figures 2, 3 et 5, on voit que, dans l'exemple illustré, le couvercle 18, de forme générale de révolution, est articulé sur l'embase 16 par une charnière 38 venue de matière avec le couvercle 18 et l'embase 16.

Le couvercle le 18 est déplaçable par rapport à l'embase 16 entre une position de dégagement de la buse 28, correspondant à la position d'ouverture du couvercle 18, et une position de recouvrement de la buse 28, correspondant à la position de fermeture du couvercle 18.

En effet, dans l'exemple illustré, le couvercle le 18 est déplaçable entre sa position de fermeture, telle que représentée sur la figure 2, dans laquelle ce couvercle empêche l'écoulement de produit contenu dans l'emballage à travers la buse 28 en maintenant la valve stop-goutte 30 en configuration fermée, et sa position d'ouverture, telle que représentée sur les figures 3 et 5, dans laquelle la valve stop-goutte 30 est dégagée de façon à permettre l'éjection de produit contenu dans l'emballage.

Le couvercle 18 comporte un embout 40 d'obturation de la buse 28 destiné à coopérer de façon étanche avec cette buse 28 lorsque le couvercle 18 est dans sa position de fermeture dans laquelle il obture la buse 28.

Le couvercle 18 comporte également une butée 42 de fermeture de la valve stop-goutte 30 coopérant avec les feuillets 32 en les maintenant dans leur position de fermeture lorsque le couvercle 18 est dans sa position de fermeture, comme cela est représenté sur la figure 2. En se référant à cette figure 2, on voit que, en position de fermeture, les feuillets 32 sont sensiblement tous parallèles à un plan perpendiculaire à la direction générale d'écoulement du produit à travers la valve stop-goutte 30, cette direction générale coïncidant sensiblement avec l'axe X.

Par contre, en se référant à la figure 3, on voit que, en position d'ouverture, les feuillets 32 sont chacun inclinés par rapport à un plan sensiblement perpendiculaire à la direction générale d'écoulement du produit à travers la valve stop-goutte 30, à savoir un plan sensiblement perpendiculaire à l'axe X. L'angle d'inclinaison des feuillets 32 par rapport à ce plan sensiblement perpendiculaire à l'axe X est par exemple compris entre 20 et 40°.

On notera que la butée 42 de fermeture de la valve stop-goutte 30 est logée, en totalité ou en grande partie, dans l'embout 40 d'obturation de la buse 28, l'embout 40 et la butée 42 étant sensiblement coaxiaux.

Pour faciliter la manoeuvre du couvercle 18 entre ses positions de fermeture et d'ouverture, ce couvercle 18 comprend un enfoncement radial 44, permettant par exemple le logement de l'ongle d'un doigt d'un utilisateur, agencé dans un bord périphérique 45 du couvercle 18 de forme générale cylindrique, sensiblement à l'opposé de la charnière 38.

Le bouchon 12 comprend des moyens d'inviolabilité ménagés sur l'embase 16 et le couvercle 18, ces moyens d'inviolabilité comprenant au moins une partie frangible d'un bord périphérique du couvercle 18 destinée à se rompre au moins partiellement lorsqu'un utilisateur sollicite le couvercle 18 vers sa position d'ouverture.

Plus particulièrement, en se référant aux figures 1 à 3, on voit que ces moyens d'inviolabilité comportent, dans l'exemple illustré, une saillie radiale 46, solidaire de l'embase 16, encliquetée, en considérant le couvercle 18 dans sa position initiale de fermeture, dans une lumière 48 ménagée dans le bord périphérique 45 du couvercle 18.

Cette lumière 48 est agencée dans le bord périphérique 45, sensiblement à l'opposé de la charnière 38. Cette lumière 48 est délimitée par une partie frangible 48F du bord périphérique 45 du couvercle 18 destinée à se rompre, au moins partiellement, pour libérer la saillie radiale 46 de la lumière 48 lorsqu'un utilisateur sollicite le couvercle 18 vers sa position d'ouverture en vue d'une première utilisation du produit contenu dans l'emballage.

En vue d'une première utilisation du produit contenu dans l'emballage 10, un utilisateur s'empare de l'emballage 10 tel qu'il représenté sur la figure 1 et sollicite le couvercle 18 vers sa position d'ouverture par exemple en insérant l'ongle de son pouce dans l'enfoncement radial 44 ménagé dans le bord périphérique 45 du couvercle 18. Ceci a pour effet de rompre la partie frangible 48F du bord périphérique 45, au moins partiellement, pour libérer la saillie radiale 46 de cette lumière 48 et permettre le déplacement du couvercle 18 jusqu'à sa position d'ouverture représentée notamment sur les figures 3 et 5.

Ensuite, l'utilisateur oriente l'emballage 10 tête en bas de façon à placer le corps 14 d'emballage plus haut que la buse 28. Dans cette position, la valve 30 est en configuration fermée, les feuillets 32 étant sensiblement jointifs entre eux et s'opposant à l'écoulement du produit contenu dans l'emballage à travers la buse 28, ceci d'autant plus efficacement que ce produit est plus visqueux.

Puis, l'utilisateur comprime le corps 14 de l'emballage et communique au produit contenu dans cet emballage une pression suffisante pour écarter les feuillets 32 entre eux et permettre l'éjection vers l'extérieur du produit contenu dans le corps 14 de l'emballage. La valve 30 est alors en configuration ouverte.

Dès que l'utilisateur relâche la pression exercée sur le corps 14 d'emballage, la valve 30 revient en configuration fermée dans laquelle les feuillets 32 sont jointifs et s'opposent à l'écoulement du produit à travers la buse 28 sans pratiquement laisser passer aucune goutte.

Enfin, l'utilisateur range l'emballage dans une position normale de stockage après avoir replacé le couvercle 18 dans sa position de fermeture.

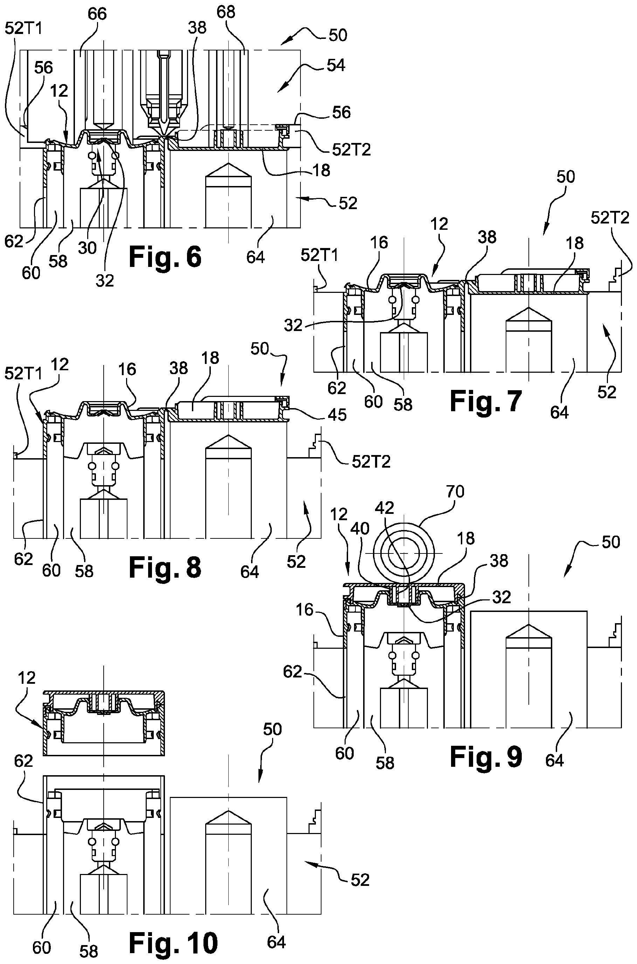

Sur les figures 6 à 10, on a représenté un moule 50 selon l'invention pour la fabrication du bouchon 12.

De façon classique, le moule 50 comporte différents organes participant au moulage de l'embase 16 et du couvercle 18 du bouchon 12 dont les principaux seront décrits ci-dessous.

De façon classique, le moule 50 comporte une plaque inférieure fixe 52 et une plaque supérieure mobile 54 qui, lors du moulage du bouchon 12, sont jointives le long d'un plan de joint 56, comme cela est représenté sur la figure 6.

On notera que la plaque inférieure fixe 52 comporte des tiroirs classiques 52T1, 52T2 mobiles sensiblement parallèlement au plan de joint 56.

Le moule 50 comprend deux noyaux inférieurs coaxiaux, respectivement interne 58 et externe 60, participant au moulage de l'embase 16 du bouchon. De façon connue en soi, le noyau inférieur externe 60 est monté coulissant axialement le long du noyau inférieur interne 58. Les noyaux inférieurs interne 58 et externe 60 traversent la plaque fixe 52.

Par ailleurs, un éjecteur tubulaire 62, entourant les noyaux inférieurs externe 60 et interne 58, est monté coulissant axialement à travers la plaque fixe 52 le long du noyau inférieur externe 60, ceci de façon connue en soi.

Le moule 50 comporte également un éjecteur 64, monté coulissant à travers la plaque fixe 52, et deux noyaux supérieurs 66, 68 agencés à travers la plaque mobile 54, destinés à participer au moulage respectivement de l'embase 16 et du couvercle 18.

On notera que le noyau inférieur interne 58 et le noyau supérieur 66 comportent des portions complémentaires de surfaces de moulage pour le moulage des feuillets 32 dans leur position d'ouverture dans laquelle il sont chacun inclinés par rapport au plan de joint 56 d'un angle compris par exemple entre 20 et 40°.

On décrira ci-dessous les principales étapes, liées à l'invention, du procédé selon l'invention de fabrication du bouchon 12 au moyen du moule 50.

Lorsque le moule 50 est dans la configuration de moulage représentée sur la figure 6, on injecte le plastique dans le moule 50, de façon à former le bouchon 12.

On notera qu'à cette étape, on moule le bouchon dans le moule 50 de façon que, dans ce moule,
- le couvercle 18 est dans une position d'ouverture sensiblement à 180° de sa position de fermeture en considérant la course angulaire du couvercle 18 autour d'un axe géométrique matérialisé par la charnière 38, et
- les feuillets 32 sont dans leur position d'ouverture.

Puis, pour débuter le démoulage du bouchon 12, on sépare, de façon connue en soi, la plaque mobile 54 de la plaque fixe 52, conjointement avec les noyaux supérieurs 66 et 68. Le moule 50 est alors dans la configuration telle que représentée sur la figure 7 (la plaque mobile 54 du moule n'est plus représentée à partir de cette figure 7).

Ensuite, on poursuit le démoulage du bouchon 12 notamment en éloignant du bouchon 12 les tiroirs 52T1 et 52T2 et en déplaçant vers le haut les noyaux inférieurs interne 58 et externe 60, l'éjecteur tubulaire 62 (entourant ces noyaux 58, 60) et l'éjecteur 64. Le moule 50 est alors dans la configuration telle que représentée sur la figure 8 dans laquelle le bord périphérique 45 du couvercle 18 est dégagé.

Après cette étape au cours de laquelle on a extrait partiellement le bouchon 12 du moule on réalise la fermeture du couvercle 18 conformément à ce qui suit.

Alors que le bouchon 12 est encore suffisamment chaud, par exemple lorsque sa température est encore comprise entre 120 et 150°, on fait pivoter, à l'aide d'un outil classique 70, le couvercle 18 autour de l'axe géométrique matérialisé par la charnière 38 jusqu'à sa position de fermeture. Le moule 50 est alors dans la configuration telle que représentée sur la figure 9 dans laquelle la butée 42 de fermeture de la valve stop-goutte 30 dont est munie le couvercle 18 coopère avec les feuillets 32 pour les placer dans leur position de fermeture et imposer à chaud que cette position de fermeture devienne leur position de repos.

Enfin, on extrait complètement du moule 50 le bouchon 12 avec son couvercle 18 fermé, en déplaçant vers le haut l'éjecteur tubulaire 62 entourant les noyaux inférieurs interne 58 et externe 60, comme cela est représenté sur la figure 10.

Dans le cas d'un bouchon 12 comportant un couvercle 18 déplaçable par rapport à l'embase 16 par vissage (non illustré), on moule le bouchon 12 également dans un moule de façon que, dans ce moule, les feuillets 32 soient dans leur position d'ouverture. Toutefois, dans ce cas, alors que le bouchon 12 est encore suffisamment chaud et partiellement démoulé, on fait coopérer un organe du moule (qui remplace la butée 42 du couvercle articulé) avec les feuillets 32 pour imposer à chaud leur position de repos.

## Revendications

1. Bouchon (12) en plastique du type comprenant une embase (16), destinée à être rapportée sur un corps (14) d'emballage, comportant
- une buse (28) à travers laquelle un produit contenu dans l'emballage est destiné à être éjecté à l'extérieur de l'emballage, et
- une valve stop-goutte (30) destinée à raccorder cette buse (28) avec l'intérieur du corps (14) d'emballage contenant le produit,
la valve stop-goutte (30) comportant des feuillets (32) déformables élastiquement entre
- une configuration dite fermée, destinée à retenir le produit contenu dans l'emballage, dans laquelle les feuillets (32) sont sensiblement jointifs entre eux et
- une configuration dite ouverte, dans laquelle les feuillets (32) sont écartés entre eux, destinée à permettre l'éjection vers l'extérieur du produit contenu dans l'emballage,
la valve stop-goutte (30) étant venue de matière avec l'embase (16), les feuillets (32) étant reliés à la buse (28) chacun par un amincissement de matière formant une articulation élastique (34) du feuillet (32), chaque feuillet (32) étant déplaçable élastiquement autour de son articulation élastique (34) entre des positions de fermeture et d'ouverture correspondant respectivement aux configurations ouverte et fermée de la valve (30),
**caractérisé en ce que** chaque feuillet (32) a une forme générale de triangle, l'articulation élastique (34) du feuillet (32) formant un premier coté du triangle, les deuxième et troisième côtés du triangle étant formés par des bords libres (34L) du feuillet (32) qui sont sensiblement jointifs avec des bords libres de feuillets (32) adjacents lorsque la valve (30) est en configuration fermée et **en ce que** au moins un bord libre de chaque feuillet (32) est muni d'une saillie formant aube (36) destinée à favoriser, par contact avec du produit éjecté vers l'extérieur de l'emballage, l'entraînement du feuillet (32) de sa position de fermeture vers sa position d'ouverture,

2. Bouchon (12) selon la revendication 1, dans lequel :
- en position de fermeture, les feuillets (32) sont sensiblement tous parallèles à un plan perpendiculaire à la direction générale d'écoulement du produit à travers la valve (30) et
- en position d'ouverture, les feuillets (32) sont chacun inclinés par rapport à un plan sensiblement perpendiculaire à la direction générale d'écoulement du produit à travers la valve (30).

3. Bouchon (12) selon l'une quelconque des revendications précédentes, dans lequel la valve (30) comprend au moins trois feuillets (32), de préférence quatre feuillets (32), et éventuellement plus de quatre feuillets (32).

4. Bouchon (12) selon l'une quelconque des revendications précédentes, dans lequel la buse (28) forme un bourrelet annulaire faisant saillie de l'embase (16) vers l'extérieur du bouchon (12).

5. Bouchon (12) selon l'une quelconque des revendications précédentes, comprenant un couvercle (18) déplaçable par rapport à l'embase (16), par exemple grâce à des moyens d'articulation ou de vissage sur l'embase (16), entre une position de dégagement de la buse (28), dite position d'ouverture, et une position de recouvrement de la buse (28), dite position de fermeture, ce couvercle (18) comportant une butée (42) de fermeture de la valve stop-goutte (30) coopérant avec les feuillets (32) en les maintenant dans leur position de fermeture lorsque le couvercle (18) est dans sa position de fermeture.

6. Bouchon (12) selon la revendication 5, dans lequel le couvercle (18) comporte un embout (40) d'obturation de la buse (28) destiné à coopérer de façon étanche avec la buse (28) lorsque le couvercle (18) est dans sa position de fermeture, la butée (42) de fermeture de la valve stop-goutte (30) étant logée dans l'embout (40) d'obturation de la buse (28).

7. Bouchon (12) selon la revendication 5 ou 6, dans lequel le bouchon a une forme générale de révolution et comprend des moyens d'inviolabilité ménagés sur l'embase (16) et le couvercle (18), ces moyens d'inviolabilité comprenant au moins une partie frangible (48F) d'un bord périphérique (45) du couvercle (18) destinée à se rompre au moins partiellement en sollicitant le couvercle (18) vers sa position d'ouverture.

8. Emballage (10) comprenant un bouchon (12) en plastique rapporté sur un corps (14) de cet emballage, **caractérisé en ce que** le bouchon (12) est selon l'une quelconque des revendications précédentes.

9. Procédé de fabrication par moulage dans un moule (50) d'un bouchon (12) en plastique, **caractérisé en ce que**
- l'on moule un bouchon (12) selon l'une quelconque des revendications 1 à 7 dans le moule (50) de façon que, dans ce moule (50), les feuillets (32) soient dans leur position d'ouverture,
- alors que le bouchon (12) est encore suffisamment chaud et partiellement démoulé, on fait coopérer un organe (42) avec les feuillets (32) pour imposer à chaud leur position de repos, et
- on extrait complètement du moule (50) le bouchon (12).

## Patentansprüche

1. Verschluss (12) aus Kunststoff vom einen Sockel (16) aufweisenden Typ, der dazu bestimmt ist, auf einem Verpackungskörper (14) angebracht zu werden, aufweisend:
- eine Düse (28), durch die hindurch ein in der Verpackung enthaltenes Produkt dazu bestimmt ist, nach außerhalb der Verpackung ausgedrückt zu werden, und
- ein Tropfstopp-Ventil (30), das dazu bestimmt ist, diese Düse (28) mit dem Inneren des Verpackungskörper (14), der das Produkt enthält, zu verbinden,
wobei das Tropfstopp-Ventil (30) Blättchen (32) aufweist, die federnd verformbar sind zwischen
- einer so genannten geschlossenen Anordnung, die dazu bestimmt ist, das in der Verpackung enthaltene Produkt zurückzuhalten, in dem die Blättchen (32) im Wesentlichen aneinanderstoßen, und
- einer sogenannten geöffneten Anordnung, in der die Blättchen (32) voneinander beabstandet sind, und die dazu bestimmt ist, das Ausdrücken des in der Verpackung enthaltenen Produkts nach außerhalb zu ermöglichen,
wobei das Tropfstopp-Ventil (30) einstückig mit dem Sockel (16) ausgebildet ist, wobei die Blättchen (32) mit der Düse (28) jeweils durch eine Materialverdünnung verbunden sind, die ein elastisches Gelenk (34) des Blättchens (32) bildet, wobei jedes Blättchen (32) um sein elastisches Gelenk (34) herum elastisch zwischen einer Schließ- und einer Öffnungsstellung verlagerbar ist, die der geöffneten bzw. geschlossenen Anordnung des Ventils (30) entspricht,
**dadurch gekennzeichnet, dass** jedes Blättchen (32) eine allgemeine Dreiecksform hat, wobei das elastische Gelenk (34) des Blättchens (32) eine erste Seite des Dreiecks bildet, wobei die zweite und dritte Seite des Dreiecks durch freie Ränder (34L) des Blättchens (32) gebildet sind, die im Wesentlichen an freie Ränder von benachbarten Blättchen (32) anstoßen, wenn das Ventil (30) in der geschlossenen Anordnung ist, und dass mindestens ein freier Rand jedes Blättchens (32) mit einem eine Schaufel (36) bildenden Vorsprung versehen ist, der dazu bestimmt ist, durch Kontakt mit nach außerhalb der Verpackung ausgedrücktem Produkt die Mitnahme des Blättchens (32) aus seiner Schließstellung in seine Öffnungsstellung zu begünstigen.

2. Verschluss (12) nach Anspruch 1, wobei:
- in Schließstellung die Blättchen (32) im Wesentlichen allesamt parallel zu einer Ebene sind, die zu der allgemeinen Fließrichtung des Produkts durch das Ventil (30) hindurch senkrecht ist, und
- in Öffnungsstellung die Blättchen (32) jeweils gegenüber einer Ebene geneigt sind, die zu der allgemeinen Fließrichtung des Produkts durch das Ventil (30) hindurch im Wesentlichen senkrecht ist.

3. Verschluss (12) nach einem der vorhergehenden Ansprüche, wobei das Ventil (30) mindestens drei Blättchen (32), vorzugsweise vier Blättchen (32), und gegebenenfalls mehr als vier Blättchen (32), aufweist.

4. Verschluss (12) nach einem der vorhergehenden Ansprüche, wobei die Düse (28) einen ringförmigen Wulst bildet, der über den Sockel (16) nach außerhalb des Verschlusses (12) vorsteht.

5. Verschluss (12) nach einem der vorhergehenden Ansprüche, aufweisend einen Deckel (18), der relativ zu dem Sockel (16), zum Beispiel mit Hilfe von Gelenkmitteln oder Mitteln zum Verschrauben auf dem Sockel (16), zwischen einer Stellung zum Freigeben der Düse (28), einer sogenannten Öffnungsstellung, und einer Stellung zum Abdecken der Düse (28), einer sogenannten Schließstellung, verlagerbar ist, wobei dieser Deckel (18) einen Anschlag (42) zum Schließen des Tropfstopp-Ventils (30) aufweist, der mit den Blättchen (32) zusammenwirkt, indem er sie in ihrer Schließstellung hält, wenn der Deckel (18) in seiner Schließstellung ist.

6. Verschluss (12) nach Anspruch 5, wobei der Deckel (18) einen Stutzen (40) zum Verschließen der Düse (28) aufweist, der dazu bestimmt ist, abdichtend mit der Düse (28) zusammenzuwirken, wenn der Deckel (18) in seiner Schließstellung ist, wobei der Anschlag (42) zum Schließen des Tropfstopp-Ventils (30) in dem Stutzen (40) zum Verschließen der Düse (28) aufgenommen ist.

7. Verschluss (12) nach Anspruch 5 oder 6, wobei der Verschluss eine allgemeine Rotationsform aufweist und Unversehrtheitsmittel umfasst, die an dem Sockel (16) und dem Deckel (18) vorgesehen sind, wobei diese Unversehrtheitsmittel mindestens einen zerbrechlichen Teil (48F) eines umlaufenden Rands (45) des Deckels (18) aufweisen, der dazu bestimmt ist, durch Drücken des Deckels (18) in seine Öffnungsstellung mindestens teilweise zu brechen.

8. Verpackung (10) aufweisend einen Verschluss (12) aus Kunststoff, der an einem Körper (14) dieser Verpackung angebracht ist, **dadurch gekennzeichnet, dass** der Verschluss (12) nach einem der vorhergehenden Ansprüche ausgestaltet ist.

9. Verfahren zur Herstellung eines Verschlusses (12) aus Kunststoff durch Gießen in einem Formwerkzeug (50), **dadurch gekennzeichnet, dass**
- ein Verschluss (12) nach einem der Ansprüche 1 bis 7 in einem Formwerkzeug (50) gegossen wird, in der Form, dass die Blättchen (32) in diesem Formwerkzeug (50) in ihrer Öffnungsstellung sind,
- während der Verschluss (12) noch ausreichend heiß und teilweise entformt ist, Zusammenwirkenlassen eines Elements (42) mit den Blättchen (32), um sie heiß in ihre Ruhestellung zu bringen, und
- vollständiges Herauslösen des Verschlusses (12) aus dem Formwerkzeug (50).

## Claims

1. Plastic cap (12) of the type comprising a base (16), intended to be attached to a packaging body (14), comprising
- a nozzle (28) through which a product contained in the packaging is intended to be ejected outside the packaging, and
- a drip-proof valve (30) intended to connect this nozzle (28) with the inside of the packaging body (14) containing the product,
the drip-proof valve (30) comprising flaps (32) that are elastically deformable between
- a so-called closed configuration, intended to hold the product contained in the packaging, in which the flaps (32) are substantially contiguous to each other and
- a so-called open configuration, in which the flaps (32) are separated from each other, intended to allow the product contained in the packaging to be ejected to the outside,
the drip-proof valve (30) being made in one piece with the base (16), the flaps (32) each being connected to the nozzle (28) by a region of thinner material forming an elastic hinge (34) of the flap (32), each flap (32) being elastically movable about its elastic hinge (34) between closed and open positions corresponding respectively to the open and closed configurations of the valve (30),
**characterised in that** each flap (32) has a generally triangular shape, the elastic hinge (34) of the flap (32) forming a first side of the triangle, the second and third sides of the triangle being formed by free edges (34L) of the flap (32) which are substantially contiguous to free edges of adjacent flaps (32) when the valve (30) is in the closed configuration and **in that** at least one free edge of each flap (32) is provided with a projection forming vane (36) intended to favour, by contact with the product ejected to the outside of the packaging, the movement of the flap (32) from its closed position to its open position,

2. Cap (12) according to claim 1, wherein:
- in the closed position, the flaps (32) are all substantially parallel to a plane perpendicular to the general direction of flow of the product through the valve (30) and
- in the open position, the flaps (32) are each inclined relative to a plane substantially perpendicular to the general direction of flow of the product through the valve (30).

3. Cap (12) according to any one of the preceding claims, wherein the valve (30) comprises at least three flaps (32), preferably four flaps (32), and optionally more than four flaps (32).

4. Cap (12) according to any one of the preceding claims, wherein the nozzle (28) forms an annular bead projecting from the base (16) towards the outside of the cap (12).

5. Cap (12) according to any one of the preceding claims, comprising a cover (18) moveable relative to the base (16), for example using means for hinging or screwing to the base (16), between a position in which it uncovers the nozzle (28), the so-called open position, and a position in which it covers the nozzle (28), the so-called closed position, this cover (18) comprising a stop (42) for closing the drip-proof valve (30) cooperating with the flaps (32) by holding them in their closed position when the cover (18) is in its closed position.

6. Cap (12) according to claim 5, wherein the cover (18) comprises an end-piece (40) for blocking the nozzle (28) intended to sealably cooperate with the nozzle (28) when the cover (18) is in its closed position, the stop (42) for closing the drip-proof valve (30) being housed in the end-piece (40) for blocking the nozzle (28).

7. Cap (12) according to claim 5 or 6, wherein the cap has a general shape of revolution and comprises pilferproof means formed on the base (16) and the cover (18), these pilferproof means comprising at least a frangible portion (48F) of a peripheral edge (45) of the cover (18) intended to break at least partially when moving the cover (18) towards its open position.

8. Packaging (10) comprising a plastic cap (12) attached to a body (14) of this packaging, **characterised in that** the cap (12) is according to any one of the preceding claims.

9. Method of manufacturing a plastic cap (12) by moulding in a mould (50), **characterised in that**
- a cap (12) according to any one of claims 1 to 7 is moulded in the mould (50) so that, in this mould (50), the flaps (32) are in their open position,
- when the cap (12) is still sufficiently hot and partially demoulded, a member (42) is made to cooperate with the flaps (32) to impose their rest position when hot, and
- the cap (12) is completely extracted from the mould (50).
